# EUROPÄISCHE PATENTSCHRIFT

(11) **EP 0 443 398 B1**
(45) Veröffentlichungstag und Bekanntmachung des Hinweises auf die Patenterteilung: **26.10.1994**
(21) Anmeldenummer: 91101873.7
(22) Anmeldetag: 11.02.1991
(51) Int. Cl.: B23C 3/12

(54) **Verputzvorrichtung für Fenster- oder Türrahmen**
Cleaning-up device for window or door frames
Dispositif à ébarber pour châssis de fenêtres ou portes

(30) Priorität: 13.02.1990 DE 9001635 U
(43) Veröffentlichungstag der Anmeldung: 28.08.1991
(73) Patentinhaber: Eisenbach, Bernhard, D-65611 Brechen (DE)
(72) Erfinder: Eisenbach, Bernhard, D-65611 Brechen (DE)
(74) Vertreter: Katscher, Helmut, Dipl.-Ing.

(56) Entgegenhaltungen:
- DE-A- 2 313 681
- DE-A- 2 513 620
- DE-A- 3 711 487
- DE-C- 3 329 756

## Beschreibung

Die Erfindung betrifft eine Verputzvorrichtung für die Ecken von aus stumpfgeschweißten Kunststoffprofilstücken bestehenden Fenster- oder Türrahmen, mit einem Support, der einen Scheibenfräser für das Rahmenaußeneck trägt und an einem Maschinengestell mittels einer zweiachsigen Bahnsteuerung in einer in der Rahmenebene verlaufenden Horizontalachse und einer senkrecht dazu verlaufenden Vertikalachse entlang der Außenkontur des Rahmenecks steuerbar ist.

Verputzvorrichtungen für die Außenecken von stumpfgeschweißten Fenster- oder Türrahmen dienen dazu, die an der Schweißnaht infolge des Stumpfschweißvorgangs der Kunststoffprofile entstandenen, nach außen überstehenden Schweißraupen zu entfernen. Da die Kunststoffprofile vor dem Verschweißen unter einem Winkel von 45° auf Gehrung geschnitten sind, verläuft die Schweißnaht unter einem Winkel von 45° zu den beiden Rahmenschenkeln.

Bei einer bekannten Verputzvorrichtung der eingangs genannten Gattung (DE-OS 33 10 307) dient die Steuerung des Supports in der Horizontalachse und in der Vertikalachse nur dazu, den dort als Kreissägeglatt ausgeführten Scheibenfräser entlang der abzuarbeitenden Schweißraupe an der Außenkontur des Rahmenecks zu führen. Für die Bearbeitung der beiden Sichtflächen des Rahmenecks müssen hierbei gesonderte Abstechwerkzeuge vorgesehen sein, die am Maschinengestell gelagert und in der Horizontalebene des Rahmens verfahrbar sind.

Es ist auch bekannt (DE-PS 33 29 756), am Support einer Verputzvorrichtung für derartige Rahmen, der jedoch nur in der Horizontalebene des Rahmens verfahrbar ist, zwei Abstechwerkzeuge für die obere und die untere Rahmensichtfläche anzubringen. Hierbei muß der das Rahmenaußeneck bearbeitende Fräser aber als Profilfräser ausgeführt sein, so daß für jedes unterschiedliche Rahmenprofil ein gesonderter Fräser erforderlich ist. Außerdem müssen die beiden Abstechwerkzeuge in ihrem gegenseitigen Abstand genau auf die Breite des zu bearbeitenden Profils eingestellt sein, so daß für die Bearbeitung unterschiedlich breiter Profile jeweils eine aufwendige Umstellung erforderlich ist. Ein Vertikalsupport trägt Fräs- und Abstechwerkzeuge zur Bearbeitung des Rahmeninnenecks.

Aufgabe der Erfindung ist es daher, eine Verputzvorrichtung der eingangs genannten Gattung so auszubilden, daß ohne Umstellung oder Austausch von Werkzeugen auch sehr unterschiedliche Rahmenprofile bearbeitet werden können.

Diese Aufgabe wird bei einer Verputzvorrichtung der eingangs genannten Gattung dadurch gelöst, daß an dem Support zwei Abstechwerkzeuge für die obere und die untere Rahmensichtfläche angebracht sind, daß das eine Abstechwerkzeug starr mit dem Support verbunden ist und das andere Abstechwerkzeug senkrecht zur Rahmenebene ausfahrbar am Support gelagert ist.

Die zweiachsige Bahnsteuerung des Supports ermöglicht es, den Scheibenfräser entlang der Außenkontur des Rahmenecks zu bewegen, um diese abzuarbeiten, und anschließend oder zuvor, jedoch in einem kontinuierlichen Arbeitsablauf, die Abstechwerkzeuge entlang der zu bearbeitenden Sichtflächen zu führen. Für die Umstellung auf unterschiedliche Rahmenprofile ist es nur erforderlich, die Bahnsteuerung entsprechend zu programmieren. Eine Umstellung oder ein Austausch von Werkzeugen ist nicht erforderlich. Für die Steuerung können daher Programme für alle anfallenden Rahmenprofile gespeichert und abgerufen werden.

Die ausfahrbare Anordnung einzelner Werkzeuge ermöglicht die Bearbeitung mit einer zweiachsigen Bewegung des Supports, ohne daß die jeweils nicht im Eingriff befindlichen Werkzeuge stören würden.

Vorteilhafte Ausgestaltungen des Erfindungsgedankens sind Gegenstand von abhängigen Ansprüchen.

Nachfolgend wird ein Ausführungsbeispiel der Erfindung näher erläutert, das in der Zeichnung dargestellt ist. Es zeigt:
Fig. 1 in einer Seitenansicht eine Verputzvorrichtung für die Ecken von Fenster- oder Türrahmen, wobei der einfacheren Darstellung halber das Maschinengestell und die Aufspanneinrichtung für den Rahmen weggelassen sind,
Fig. 2 eine Ansicht in Richtung des Pfeiles II in Fig. 1,

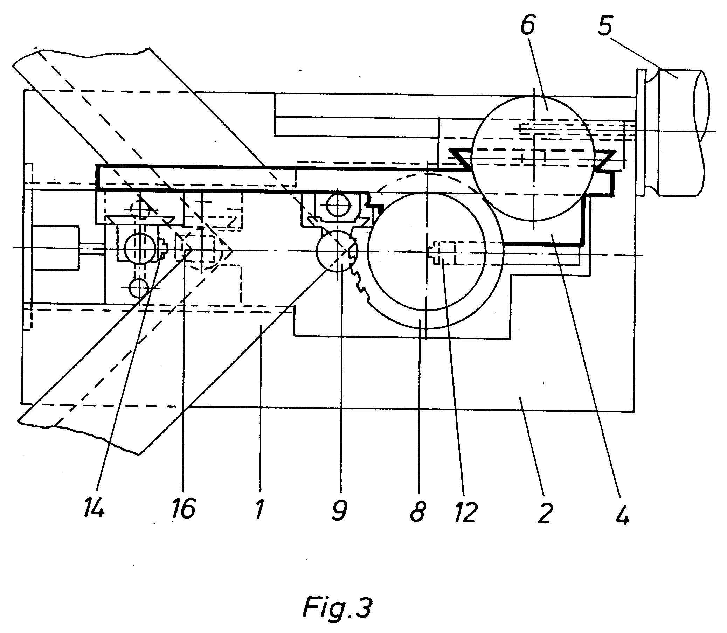

Fig. 3 eine Draufsicht in Richtung des Pfeiles III in Fig. 1 und
Fig. 4-6 unterschiedliche Stellungen im Laufe der Bearbeitung des Rahmenecks in einer Darstellung entsprechend der Fig. 1.

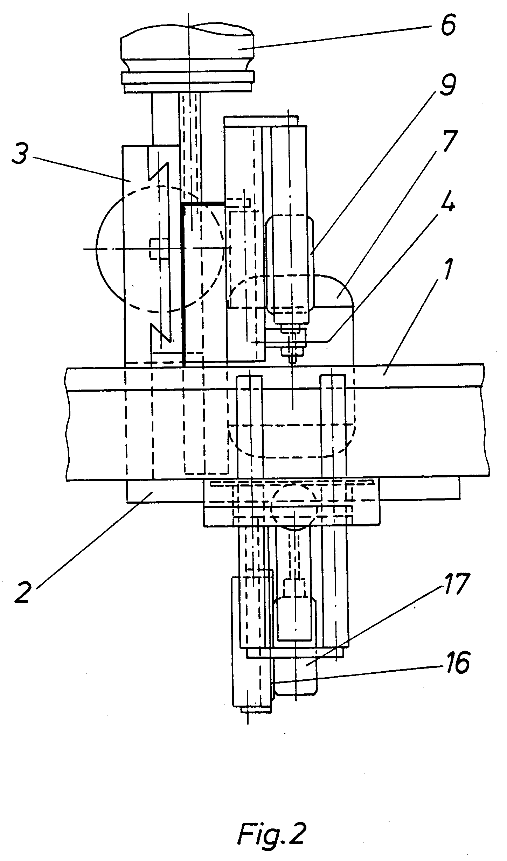

Die in der Zeichnung dargestellte Verputzvorrichtung dient dazu, die Rahmenecken von aus stumpfgeschweißten Kunststoffprofilstücken bestehenden Fenster- oder Türrahmen 1 (in der Zeichnung im Schnitt dargestellt) so zu bearbeiten, daß die beim Stumpfschweißen entstandenen Schweißraupen allseitig entfernt werden. Die Verputzvorrichtung weist ein (in Fig. 2 nur teilweise dargestellt) Maschinengestell 2 auf, an dem der Rahmen 1 mittels einer (ebenfalls nicht dargestellten) Aufspannvorrichtung gehalten wird.

Am Maschinengestell 2 ist über eine Kreuzschlittenanordnung 3 ein Support 4 zweiachsig verfahrbar. Mittels eines horizontalen Vorschubantriebs 5 und eines vertikalen Vorschubantriebs 6 ist der Support 4 in einer Horizontalachse, die in der Rahmenebene des Rahmens 1 verläuft, und in einer Vertikalachse, die senkrecht dazu verläuft, verfahrbar. Die Steuerung der Vorschubantriebe 5, 6 erfolgt durch eine zweiachsige numerische Bahnsteuerung, vorzugsweise eine CNC-Steuerung, nach einem jeweils vorgegebenen Programm.

Am Support 4 ist ein Fräsantrieb 7 angebracht, der einen Scheibenfräser 8 mit senkrechter Fräserachse trägt.

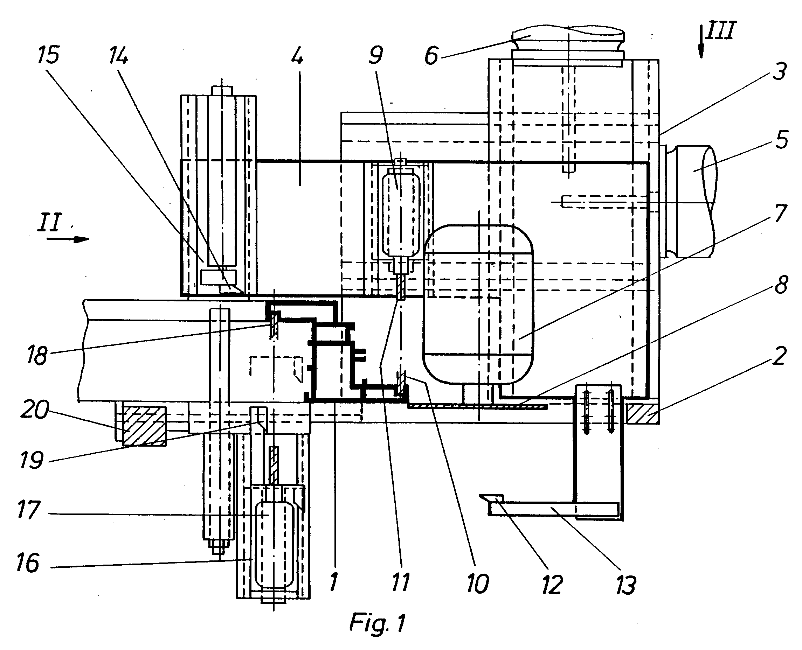

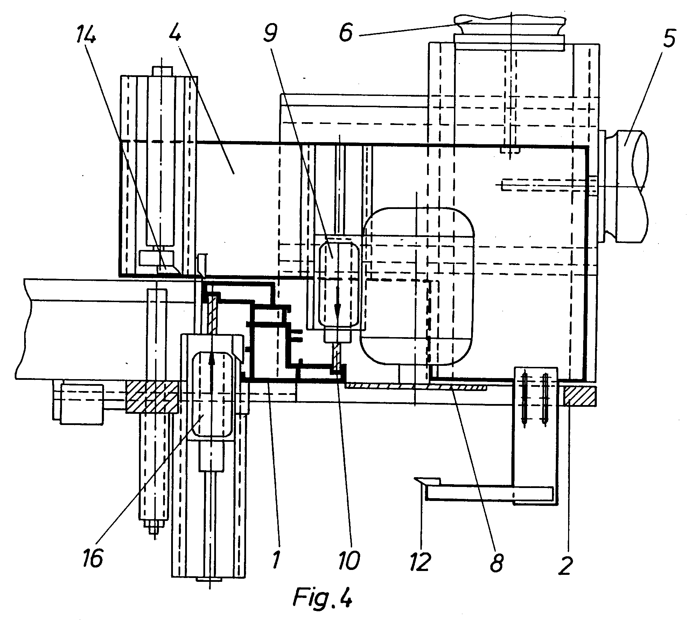

Am Support 4 ist eine senkrecht zur Rahmenebene ausfahrbare Bohreinheit 9 gelagert, die zur Bearbeitung einer Dichtungsnut 10 des Rahmens 1 dient. Ausgehend von der in Fig. 1 gezeigten Ausgangsstellung wird die Bohreinheit 9 nach unten verfahren. Der in der Bohreinheit 9 aufgenommene Bohrer 11 bohrt dabei die Dichtungsnut 10 im Bereich der Schweißnaht auf (Fig. 4). Anschließend fährt die Bohreinheit 9 wieder in die in Fig. 1 gezeigte Ausgangsstellung zurück.

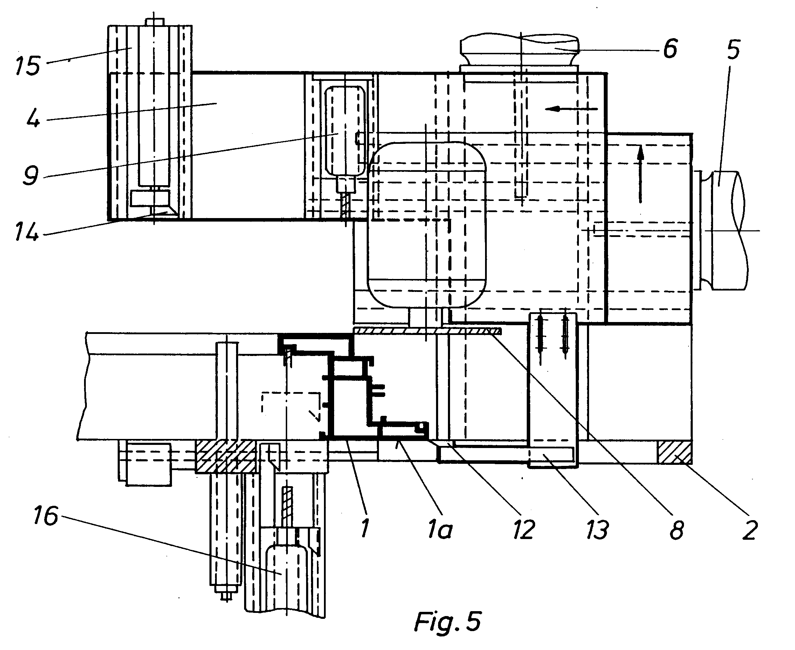

Ausgehend von dieser Ausgangsstellung nach Fig. 1 wird der Support 4 durch die zweiachsige numerische Bahnsteuerung so gesteuert, daß die Bearbeitungsstelle des Scheibenfräsers 8 der Außenkontur des Rahmenecks folgt und die dort befindliche überstehende Schweißraupe abarbeitet, bis die in Fig. 5 gezeigte Stellung erreicht ist.

Ein Abstechwerkzeug 12 ist über einen Arm 13 starr mit dem Support 4 verbunden. Ausgehend von der in Fig. 5 gezeigten Stellung, in der sich das Abstechwerkzeug 12 am äußeren Ende der Schweißraupe der unteren Sichtfläche 1a des Rahmens 1 befindet, wird der Support 4 in horizontaler Richtung auf den Rahmen 1 zu verfahren, wobei das Abstechwerkzeug 12 die Schweißraupe in der unteren Sichtfläche 1a entfernt.

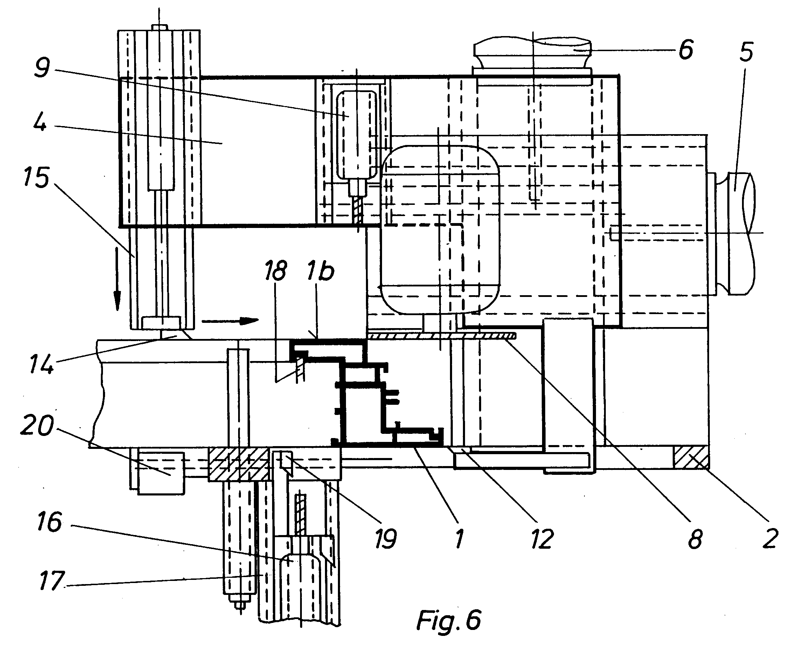

Ein zweites Abstechwerkzeug 14 ist senkrecht verfahrbar an einem Schlitten 15 angebracht, der ebenfalls vom Support 4 getragen wird. In Fig. 6 befindet sich der Support 4 in der gleichen Stellung wie in Fig. 5, jedoch ist das Abstechwerkzeug 14 mittels des Schlittens 15 nach unten ausgefahren und befindet sich in der Höhe der oberen Sichtfläche 1b des Rahmens 1. Aus dieser Stellung nach Fig. 6 wird der Support 4 mittels des Vorschubantriebs 5 vom Rahmen 1 nach außen verfahren. Dabei bewegt sich das Abstechwerkzeug 14 entlang der Schweißraupe an der oberen Sichtfläche 1b und arbeitet diese Schweißraupe ab.

Am Maschinengestell 2 ist eine Bearbeitungseinheit 16 für das Rahmeninneneck senkrecht zur Rahmenebene verfahrbar gelagert. Diese Bearbeitungseinheit 16 weist eine der Bohreinheit 9 entsprechende Bohreinheit 17 auf, die zur Bearbeitung einer zweiten Dichtungsnut 18 am Rahmen 1 dient. Außerdem ist an der Bearbeitungseinheit 16 ein Abstechwerkzeuge 19 angebracht, das dazu dient, die am Rahmeninneneck entstandene Schweißraupe mindestens teilweise zu entfernen. Die Stellung des Abstechwerkzeuges 19 beim Abstechvorgang ist in Fig. 6 mit gestrichelten Linien angedeutet. Ein horizontaler Vorschubantrieb 20 dient dazu, die Bearbeitungseinheit 16 auch in horizontaler Richtung zu verfahren, um sie in die jeweilige Abstechstellung zu bringen.

## Patentansprüche

1. Verputzvorrichtung für die Ecken von aus stumpfgeschweißten Kunststoffprofilstücken bestehenden Fenster- oder Türrahmen (1), mit einem Support (4), der einen Scheibenfräser (8) für das Rahmenaußeneck trägt und an einem Maschinengestell (2) mittels einer zweiachsigen Bahnsteuerung in einer in der Rahmenebene verlaufenden Horizontalachse und einer senkrecht dazu verlaufenden Vertikalachse entlang der Außenkontur des Rahmenecks steuerbar ist, dadurch gekennzeichnet, daß an dem Support (4) zwei Abstechwerkzeuge (12, 14) für die obere und die untere Rahmensichtfläche (1b, 1a) angebracht sind und daß das eine Abstechwerkzeug (12) starr mit dem Support (4) verbunden ist und das andere Abstechwerkzeug (14) senkrecht zur Rahmenebene ausfahrbar am Support (4) gelagert ist.

2. Verputzvorrichtung nach Anspruch 1, dadurch gekennzeichnet, daß am Support (4) eine senkrechte zur Rahmenebene ausfahrbare Bohreinheit (9) zur Bearbeitung einer Dichtungsnut (10) des Rahmens (1) gelagert ist.

3. Verputzvorrichtung nach Anspruch 1, dadurch gekennzeichnet, daß am Maschinengestell (2) eine Bearbeitungseinheit (16) für das Rahmeninneneck mindestens senkrecht zur Rahmenebene verfahrbar gelagert ist.

## Claims

1. Cleaning-up device for the corners of window or door frames (1) comprising butt-welded profiled pieces of plastics, with a support (4) which carries a disc milling cutter (8) for the outside corner of the frame and which can be controlled on a machine chassis (2) by means of a two axis continuous path control in a horizontal axis running in the plane of the frame and a vertical axis running perpendicularly to this along the outside contour of the corner of the frame, characterised in that two paring tools (12, 14) for the upper and the lower visible surfaces of the frame (1b 1a) are fitted on the support (4), and that one paring tool (12) is rigidly joined to the support (4) and the other paring tool (14) is supported on the support (4) so that it can be moved out perpendicularly to the plane of the frame.

2. Cleaning-up device according to Claim 1, characterised in that on the support (4) a drilling unit (9) for machining a packing groove (10) of the frame (1) is supported so that it can be moved out perpendicularly to the plane of the frame.

3. Cleaning-up device according to Claim 1, characterised in that a machining unit (16) for the inside corner of the frame is supported on the machine chassis (2), which can be moved out at least perpendicularly to the plane of the frame.

## Revendications

1. Dispositif à ébarber pour les angles de fenêtres ou de portes (1) constituées de profilés de matière plastique soudés bord à bord, comportant un support (4), qui porte une fraise à disque (8) pour l'angle externe du châssis et peut être commandé, sur un bâti de machine, via une commande continue à deux axes, selon un axe horizontal s'étendant dans le plan du châssis et selon un axe vertical perpendiculaire au premier le long du contour externe de l'angle du châssis, caractérisé en ce que deux outils de coupe (12, 14) sont montés sur le support (4) pour les surfaces visibles supérieure et inférieure (1b, 1a) du châssis et un outil de coupe (12) est relié de manière rigide au support (4), tandis que l'autre outil de coupe (14) est monté sur le support (4) de manière à pouvoir se déplacer perpendiculairement au plan du châssis.

2. Dispositif à ébarber selon la revendication 1, caractérisé en de qu'un unité d'alésage (9) déplaçable perpendiculairement au plan du châssis est montée sur le support (4) pour pouvoir travailler sur une rainure de garniture d'étanchéité (10) du châssis (1).

3. Dispositif à ébarber selon la revendication 1, caractérisé en ce qu'une unité d'usinage (16) est montée sur le bâti (2) de la machine pour l'angle intérieur du châssis de manière à pouvoir se déplacer au moins perpendiculairement au plan du châssis.
